# EUROPÄISCHE PATENTSCHRIFT

(11) **EP 3 629 312 B1**
(45) Veröffentlichungstag und Bekanntmachung des Hinweises auf die Patenterteilung: **12.07.2023**
(21) Anmeldenummer: 19198662.9
(22) Anmeldetag: 20.09.2019
(51) Int. Cl.: G08G 1/0967, G01S 5/00, G01S 5/02

(54) **SYSTEM ZUR BESTIMMUNG DER POSITION VON VERKEHRSLEITEINRICHTUNGEN**
VEHICLE GUIDANCE DEVICE POSITION DETERMINING SYSTEM
SYSTÈME DE DÉTERMINATION DE LA POSITION DES DISPOSITIFS DE GUIDAGE DE LA CIRCULATION

(30) Priorität: 26.09.2018 DE 102018007632
(43) Veröffentlichungstag der Anmeldung: 01.04.2020
(73) Patentinhaber: CM1 GmbH, 91207 Lauf an der Pegnitz (DE)
(72) Erfinder: Kaluza, Sebastian, 80639 München (DE); Falkner, Max-David, 2304 Orth an der Donau (AT); Häupl, Markus, 9529 Sattendorf (AT)
(74) Vertreter: PATERIS Patentanwälte PartmbB

(56) Entgegenhaltungen:
- WO-A1-2009/098438
- DE-A1-102004 035 856
- DE-A1-102016 214 470

## Beschreibung

Die vorliegende Erfindung betrifft ein System zum Bereitstellen von Positionsinformationen zur Überprüfung und Dokumentation von Positionen von als Leitbaken ausgebildeten Verkehrsleiteinrichtungen bei geänderter Verkehrsführung im Bereich einer Baustelle.

Verkehrsleiteinrichtungen werden zur Begrenzung von Fahrbahnen und/oder zum Festlegen von Fahrbahnen bei geänderter Verkehrsführung bzw. bei geänderter Spurführung verwendet. Die Verkehrsleiteinrichtungen werden benötigt, um einem Verkehrsteilnehmer die geänderte Verkehrsführung anzuzeigen. Die Verkehrsführung wird beispielsweise bei Baustellen, bei Arbeiten in der Nähe der Fahrbahn oder auch für Aufräumarbeiten bei Unfällen geändert. Um den Verkehr an Baustellen vorbeizuführen, können die Fahrbahnen beispielsweise verschwenkt und/oder die Fahrzeuge auf eine Spur der Gegenfahrbahn übergeleitet werden, die eigentlich dem Gegenverkehr zugeordnet ist.

Gerade bei Baustellen ist die korrekte Position der einzelnen Verkehrsleiteinrichtungen äußerst wichtig, da von der Position der Verkehrsleiteinrichtungen die Sicherheit des Baustellenpersonals, d. h. der an der Baustelle tätigen Arbeiter, abhängt. Der Baustellenbetreiber oder die an der Baustelle tätigen Firmen, die Arbeiten an der Fahrbahn oder im Bereich der Fahrbahn vornehmen, müssen exakt dokumentieren, dass die Verkehrsleiteinrichtungen korrekt positioniert wurden und die korrekte Positionierung der Verkehrsleiteinrichtungen regelmäßig überprüft wird. Eine derartige Überprüfung findet in Abhängigkeit der gesetzlichen Vorgaben häufig mehrmals täglich statt. Sollte es zu einem Unfall kommen, muss der Baustellenbetreiber oder die zuständige Firma nachweisen können, dass die Verkehrsleiteinrichtung korrekt positioniert und die Positionierung regelmäßig überprüft wurde. Die Überprüfung der Position der Verkehrsleiteinrichtungen und die Dokumentation der Prüfungen gehen somit mit einem hohen Zeit- und Kostenaufwand einher.

Die Position von Verkehrsleiteinrichtungen wird auch für Fahrassistenzsysteme eines Fahrzeugs oder autonome Fahrzeuge benötigt. Für Fahrassistenzsysteme oder die Systeme eines autonomen Fahrzeugs stellen insbesondere Baustellen hochkomplexe Situationen dar. Eine Baustelle kann verengte Fahrspuren, sich ändernde Streckenführungen oder fehlende Straßen- bzw. Fahrbahnbegrenzungen aufweisen. Ohne die Position der Verkehrsleiteinrichtungen zu kennen, sind Fahrzeuge mit Fahrassistenzsystemen oder autonome Fahrzeuge häufig nicht in der Lage, Baustellen autonom oder selbstständig mit dem Fahrassistenzsystem zu durchfahren. In vielen Fällen fordert das Fahrzeug den Fahrer dann auf, im Bereich der Baustelle die Kontrolle über das Fahrzeug zu übernehmen. Autonome Fahrzeuge oder Fahrassistenzsysteme greifen häufig auf kartenbasierte Umgebungsmodelle zu, wenn sie Informationen über den Straßenverlauf bzw. den Straßenverkehr benötigen. In einem kartenbasierten Umgebungsmodell sind jedoch häufig Änderungen der Verkehrsführung, gerade wenn diese kurzfristig vorgenommen werden, nicht oder nicht ausreichend verzeichnet, wodurch die autonomen Fahrzeuge bzw. die Fahrassistenzsysteme einen Streckenabschnitt mit geänderter Verkehrsführung oder den Bereich einer Baustelle nicht autonom oder selbstständig durchfahren können. Ähnlich verhält es sich mit Tunneln und Unterführungen, die unter Umständen von autonomen Fahrzeugen oder Fahrzeugen mit Fahrerassistenzsystemen nicht selbstständig oder autonom durchfahren werden können.

Aus der WO 2009 / 098438 A1 ist ein System zur Bestimmung der Position von Verkehrsleiteinrichtungen bekannt, wobei das System wenigstens eine Sensoranordnung und wenigstens eine Schnittstelleneinheit aufweist, wobei die Sensoranordnung an wenigstens einer Verkehrsleiteinrichtung angebracht ist, wobei die Sensoranordnung dazu ausgebildet ist, zumindest Positionsinformationen der Sensoranordnung zu bestimmen, die die Position der wenigstens einen Verkehrsleiteinrichtung angeben, wobei die Sensoranordnung dazu ausgebildet ist, die bestimmten Positionsinformationen an die wenigstens eine Schnittstelleneinheit zu senden, wobei die wenigstens eine Schnittstelleneinheit dazu ausgebildet ist, die von der Sensoranordnung gesendeten Positionsinformationen zu empfangen, und wobei die wenigstens eine Schnittstelleneinheit ferner dazu ausgebildet ist, die Positionsinformationen wenigstens einem externen Empfänger bereitzustellen, wobei die Sensoranordnung mehrere Sensoreinheiten umfasst, wobei jede der Sensoreinheiten dazu ausgebildet ist, relative Positionsinformationen relativ zu zumindest einer weiteren Sensoreinheit zu ermitteln, wobei die wenigstens eine Sensoreinheit wenigstens einen Sensor aufweist, der die relativen Positionsinformationen wenigstens einer weiteren Sensoreinheit der Sensoranordnung erfasst, wobei die Sensoreinheiten der Sensoranordnung zusammenwirken, um Positionsinformationen für jede Sensoreinheit zu bestimmen.

Aus der DE 10 2004 035 856 A1 ist eine elektrische Zusatzeinrichtung zur Anbringung an einem Halterohr einer Verkehrseinrichtung, wie z.B. eines Verkehrsschilds, einer Verkehrsampel, eines Verkehrsleitpfostens sowie einer Bake bekannt, welche elektronische Mittel mit einer Sensoreinrichtung zur Erfassung von Straßenverkehrsdaten und/oder einen Datensender zum Senden von Straßenverkehrsdaten aufweist.

Es ist eine Aufgabe der vorliegenden Erfindung ein System zur Bestimmung der Position von Verkehrsleiteinrichtungen bereitzustellen, mit dem sich Positionsinformationen von einer Verkehrsleiteinrichtung oder mehreren Verkehrsleiteinrichtungen hoch exakt und echtzeitnah bestimmen lassen.

Diese Aufgabe wird mit einem System mit den Merkmalen des Anspruchs 1 gelöst. Weitere Ausführungsformen sind in den abhängigen Ansprüchen angegeben.

Das System zum Bereitstellen von Positionsinformationen zur Überprüfung und Dokumentation von Positionen von als Leitbaken ausgebildeten Verkehrsleiteinrichtungen bei geänderter Verkehrsführung im Bereich einer Baustelle weist wenigstens eine Sensoranordnung und wenigstens drei Schnittstelleneinheiten auf, wobei die Verkehrsleiteinrichtungen Fahrbahnen begrenzen und/oder Fahrbahnen bei geänderter Verkehrsführung oder bei geänderter Spurführung festlegen. Die Sensoranordnung ist an wenigstens einer Verkehrsleiteinrichtung angebracht. Die Sensoranordnung ist dazu ausgebildet, Positionsinformationen der Sensoranordnung zu bestimmen, die die Position wenigstens einer Verkehrsleiteinrichtung angeben. Die Sensoranordnung ist dazu ausgebildet, die bestimmten Positionsinformationen an die wenigstens drei Schnittstelleneinheiten zu senden. Die wenigstens drei Schnittstelleneinheiten sind dazu ausgebildet, die von der wenigstens einen Sensoreinheit gesendeten Positionsinformationen zu empfangen, wobei die wenigstens drei Schnittstelleneinheiten ferner dazu ausgebildet sind, die Positionsinformationen wenigstens einem externen Empfänger bereitzustellen.

Mit dem erfindungsgemäßen System kann die Position wenigstens einer Verkehrsleiteinrichtung und damit der Verlauf des Verkehrsweges im Bereich der wenigstens einen Verkehrsleiteinrichtung exakt und in Echtzeit oder zumindest echtzeitnah bestimmt werden. Die mit dem System bestimmten Positionsinformationen können zur Überprüfung und Dokumentation der Positionierung der Verkehrsleiteinrichtungen bei geänderter Verkehrsführung (z.B. bei einer Baustelle) bereitgestellt werden. Ferner können die von dem System bestimmten Positionsinformationen direkt für autonome Fahrzeuge oder Fahrassistenzsysteme sowie für Kartendienste bereitgestellt werden, auf die autonome Fahrzeuge oder die Fahrassistenzsysteme zugreifen können. Zudem kann die genaue Verkehrsführung bzw. Streckenführung und auch die Position und Lage von Baustellen exakt und echtzeitnah bestimmt werden.

Die wenigstens drei Schnittstelleneinheiten sind Teil der Sensoranordnung. Die wenigstens drei Schnittstelleneinheiten sind dazu ausgebildet, Positionsinformationen zu erfassen.

Die Sensoranordnung weist mehrere Sensoreinheiten auf. Die Sensoreinheiten der Sensoranordnung können an wenigstens einer Verkehrsleiteinrichtung angebracht sein. Die Sensoreinheiten sind dazu ausgebildet, Positionsinformationen der einzelnen Sensoreinheiten der Sensoranordnung zu bestimmen, die die Position der wenigstens einen Verkehrsleiteinrichtung angeben. Wenigstens eine der Sensoreinheiten der Sensoranordnung ist dazu ausgebildet, die bestimmten Positionsinformationen an die wenigstens drei Schnittstelleneinheiten zu senden. Die wenigstens drei Schnittstelleneinheiten sind dazu ausgebildet, die von den Sensoreinheiten gesendeten Positionsinformationen zu empfangen, wobei die wenigstens drei Schnittstelleneinheiten ferner dazu ausgebildet sind, die Positionsinformationen wenigstens einem externen Empfänger bereitzustellen.

Die Sensoreinheiten der Sensoranordnung wirken zusammenwirken, um Positionsinformationen für jede einzelne der Sensoreinheiten zu bestimmen. Anders ausgedrückt, trägt eine der Sensoreinheiten zur Bestimmung der Positionsinformationen von zumindest einer weiteren Sensoreinheit bei. Die Sensoreinheiten bilden ein Sensorfeld, in dem Veränderungen der Positionsinformationen der einzelnen Sensoreinheiten und damit Veränderungen der Positionen der Verkehrsleiteinrichtung oder der Verkehrsleiteinrichtungen unmittelbar und exakt erfasst werden können.

Die Sensoreinheiten und die wenigstens drei Schnittstelleneinheiten können im Wesentlichen identisch aufgebaut sein. Mit anderen Worten kann jede Sensoreinheit zum Empfangen von Positionsinformationen und zum Senden von Positionsinformationen an einen externen Empfänger ausgebildet sein. Die wenigstens drei Schnittstelleneinheiten können zum Bestimmen von Positionsinformationen ausgebildet sein. Falls die Schnittstelleneinheiten und die Sensoreinheiten identisch aufgebaut sind, können diese Einheiten sich in der ihnen jeweils zugewiesenen Funktion (Sensoreinheit oder Schnittstelleneinheit) unterscheiden.

Die Sensoreinheiten können dazu ausgebildet sein, die Positionsinformationen mittels UWB (englisch: Ultra Wide Band; deutsch: Ultrabreitband), WiFi, RTK (englisch: Real Time Kinematic; deutsch: Echtzeitkinematik), GPS, DGPS (englisch: Differential Global Positioning System; deutsch: Differentielles Globales Positionierungssystem) oder 5G zu bestimmen. Als Verfahren zur Bestimmung der Sensoreinheiten kann beispielsweise eines der Verfahren least-squares, maximum likelihood estimate, maximum aposteriori propability, Triangulation und/oder Trilateration verwendet werden.

Verkehrsleiteinrichtungen können beispielsweise Leitbaken, Schrankenzäune, Absperrtafeln, Tunnel- und Betonleitwände, Stahlschutzwände, Leitkegel, Pelonen und Leitpfosten sein. Verkehrsleiteinrichtungen können allgemein temporäre oder dauerhafte Einrichtungen sein, die einem Fahrzeug oder einem Verkehrsteilnehmer die Verkehrsführung anzeigen oder vorgeben.

Die Sensoreinheiten der Sensoranordnung sind dazu ausgebildet, relative Positionsinformationen relativ zu zumindest einer weiteren der Sensoreinheiten zu bestimmen. Eine Sensoreinheit kann beispielsweise die relativen Positionsinformationen wenigstens einer weiteren Sensoreinheit relativ zu ihr selbst und/oder relativ zu wenigstens einer weiteren Sensoreinheit erfassen. Die Sensoreinheiten der Sensoranordnung bestimmen somit gegenseitig ihre relativen Positionsinformationen. Jede Sensoreinheit kann einen Referenzpunkt für die Bestimmung der Positionsinformationen bilden. Da die einen Referenzpunkt bildenden Sensoreinheiten gegenseitig ihre relativen Positionsinformationen relativ zueinander bestimmen können, können die relativen Positionsinformationen der Sensoreinheiten in einer Ebene oder in einem Raum bestimmt werden. Die Sensoreinheiten der Sensoranordnung können zwischen sich ein Maschennetz aufbauen, in dem kleinste Veränderungen der Positionsinformationen einer oder mehrerer der Sensoreinheiten echtzeitnah erfasst und an die wenigstens eine Schnittstelleneinheit ausgegeben werden können.

Die Sensoreinheiten weisen wenigstens einen Sensor auf, der die Positionsinformationen wenigstens einer weiteren Sensoreinheit der Sensoranordnung erfassen kann. Die von den Sensoreinheiten erfassten Positionsinformationen umfassen einen Abstandswert einer der Sensoreinheiten zu wenigstens einer weiteren der Sensoreinheiten. Beispielsweise kann eine Sensoreinheit einen Abstandswert zu der ihr nächstliegenden Sensoreinheit oder zu den ihr nächstliegenden Sensoreinheiten erfassen. In dem von den Sensoreinheiten aufgebauten Maschennetz kann jede Sensoreinheit kontinuierlich den Abstand zu einer oder mehreren der übrigen Sensoreinheiten erfassen. Änderungen eines Abstandswerts oder mehrerer Abstandswerte zwischen einer oder mehreren Sensoreinheiten können echtzeitnah von den Sensoreinheiten erfasst werden. Diese Veränderungen können dann an die wenigstens drei Schnittstelleneinheiten ausgegeben und als aktualisierte Positionsinformationen wenigstens einem externen Empfänger bereitgestellt werden.

Das System ist dazu ausgebildet, die Position der wenigstens drei Schnittstelleneinheiten in absoluten Positionsinformationen zu ermitteln und/oder einzulesen. Die absoluten Positionsinformationen der wenigstens drei Schnittstelleneinheiten können vorgegeben sein. Die absoluten Positionsinformationen der wenigstens drei Schnittstelleneinheiten können die Geopositionen der wenigstens drei Schnittstelleneinheiten angeben. Die Geopositionen der wenigstens drei Schnittstelleneinheiten können in absoluten Koordinaten angegeben werden. Die Geopositionen der wenigstens drei Schnittstelleneinheiten können beispielsweise in WGS84-Koordinaten angegeben werden. Die Geopositionen der wenigstens drei Schnittstelleneinheiten können beispielsweise über ein bekanntes Vermessungsverfahren bestimmt werden.

Die wenigstens drei Schnittstelleneinheiten sind zur Bestimmung von zumindest 2-dimensionalen Positionsinformationen durch Verknüpfen der relativen Positionsinformationen und der absoluten Positionsinformationen ausgebildet, wobei die 2-dimensionalen Positionsinformationen zum Integrieren in eine digitale Karte eines Kartendienstes als externen Empfänger ausgebildet sind, wobei die digitale Karte für einen Zugriff eines Navigationssystems eines autonomen Fahrzeugs oder eines Fahrassistenzsystems eines Fahrzeugs ausgebildet ist um die bestimmten Positionen der Verkehrsleiteinrichtungen zu erfassen.

Die mehreren Sensoreinheiten können wenigstens einen weiteren Sensor aufweisen. Dieser Sensor kann beispielsweise ein Beschleunigungssensor oder ein Gyroskop sein. Der Beschleunigungssensor und/oder das Gyroskop können dazu dienen, Energie zu sparen. Der Beschleunigungssensor und/oder das Gyroskop können eine Bewegung der Sensoreinheit erfassen und das System "aufwecken", um die aktuellen Positionsinformationen zu bestimmen. Die Sensoreinheiten können nur im "wachen" Zustand die bestimmten Positionsinformationen senden, wodurch Energie eingespart werden kann.

Das System weist wenigstens eine Informationsverarbeitungseinheit auf. Die Informationsverarbeitungseinheit kann die von den Sensoreinheiten erfassten relativen Positionsinformationen verarbeiten. Die Informationsverarbeitungseinheit ist dazu ausgebildet, die Informationen zu verarbeiten, die von dem wenigstens einen weiteren Sensor der Sensoreinheit erfasst wurden. Die Informationsverarbeitungseinheit ist dazu ausgebildet, die von den Sensoreinheiten ermittelten relativen Positionsinformationen in Bezug zu absoluten Positionsinformationen der wenigstens drei Schnittstelleneinheiten setzen. Durch die Herstellung eines Bezugs zwischen den relativen Positionsinformationen der Sensoreinheiten und den absoluten Positionsinformationen der wenigstens drei Schnittstelleneinheiten, können die relativen Positionsinformationen der Sensoreinheiten mit den absoluten Positionsinformationen verortet werden. Dadurch können die relativen Positionsinformationen der Sensoreinheiten beispielsweise mit Bezug zu den Geopositionen der wenigstens drei Schnittstelleneinheiten von den wenigstens drei Schnittstelleneinheiten an einen externen Empfänger ausgegeben werden. Ein externer Empfänger für relative Positionsinformationen mit Bezug zur Geopositionen können Kartendienste sein, die digitale Karten für Navigationssysteme von autonomen Fahrzeugen oder von Fahrassistenzsystemen bereitstellen. Solche Kartendienste können beispielsweise cloud-basiert sein. Die wenigstens drei Schnittstelleneinheiten können derart ausgebildet sein, dass sie direkt mit einer (cloud-basierten) digitalen Karte kommunizieren können, um die von dem System bestimmten Positionsinformationen in die digitale Karte einzugeben. Weitere Empfänger für derartige Positionsinformationen können beispielsweise Verkehrsleitzentralen oder Autobahnanbieter sein.

Die wenigstens drei Schnittstelleneinheiten können dazu ausgebildet sein, kabellos mit dem wenigstens einen externen Empfänger zu kommunizieren. Jede Sensoreinheit kann wenigstens eine Sende-/Empfangseinheit aufweisen, die zumindest zur kabellosen Kommunikation mit den wenigstens drei Schnittstelleneinheiten ausgebildet sein. Die Sensoreinheiten können zumindest mit der wenigstens drei Schnittstelleneinheiten beispielsweise über eine Funktechnologie namens "Symmetrical double-sided two way ranging" kommunizieren. Die Sensoreinheiten der Sensoranordnung können auch untereinander kabellos kommunizieren. Jede der Sensoreinheiten kann kabellos Informationen von anderen Sensoreinheiten empfangen und Informationen an andere Sensoreinheiten kabellos senden.

Der externe Empfänger kann ferner ein Fahrzeug sein. Die wenigstens eine Schnittstelleneinheit kann dazu ausgebildet sein, mit einem Fahrzeug als externem Empfänger zu kommunizieren. Die von dem System bestimmten Positionsinformationen können in Echtzeit oder zumindest echtzeitnah an ein Fahrzeug übermittelt werden, dass sich dem Streckenabschnitt mit geänderter Verkehrsführung nähert oder sich in diesem Streckenabschnitt befindet.

Der wenigstens eine Sensor zur Erfassung der Positionsinformationen kann ein Time-of-Flight-Sensor sein. Mit einem Time-of-Flight-Sensoren können Abstände bzw. Entfernungen und auch Höhenunterschiede erfasst werden. Mit den Time-of-Flight-Sensoren können somit relative Positionsinformationen der einzelnen Sensoreinheiten erfasst werden, die die Position und die Lage der einzelnen Sensoreinheiten relativ zueinander angeben. Mit den Time-of-Flight-Sensoren können selbst geringe Änderungen der relativen Positionsinformationen der Sensoreinheiten bzw. der Verkehrsleiteinrichtungen, an denen die Sensoreinheiten angebracht sind, erfasst werden. Mit den Time-of-Flight-Sensoren kann das digitale Maschennetz aufgebaut werden, um die Position und Lage der geänderten Verkehrsführung bzw. des Streckenabschnitts mit der geänderten Verkehrsführung zu erzeugen. Die erfassten Änderungen der Positionsinformationen können an die wenigstens eine Schnittstelleneinheit ausgegeben und von der wenigstens einen Schnittstelleneinheit für externe Empfänger bereitgestellt werden.

Die wenigstens drei Schnittstelleneinheiten können dazu ausgebildet sein, ein Koordinatensystem aufzuspannen. Die Positionsinformationen der Sensoreinheiten können mit Bezug auf dieses Koordinatensystem bestimmt werden. In dem von den wenigstens drei Schnittstelleneinheiten aufgespannten lokalen Koordinatensystem können die relativen Positionsinformationen der Sensoreinheiten bestimmt werden. Diese relativen Positionsinformationen können mit den absoluten Positionsinformationen verknüpft und an einen externen Empfänger ausgegeben werden. Die wenigstens drei Schnittstelleneinheiten können eine Sensoreinheit sein. Die wenigstens drei Schnittstelleneinheiten weisen einen Sensor zur Erfassung von relativen Positionsinformationen auf.

Die wenigstens drei Schnittstelleneinheiten können an das Internet angebunden sein. Darüber hinaus können die wenigstens drei Schnittstelleneinheiten dazu ausgebildet sein, das sie mittels WiFi Informationen senden und empfangen kann. Die wenigstens drei Schnittstelleneinheiten können wenigstens einen GPS-Empfänger aufweisen.

Das System kann zumindest drei Schnittstelleneinheiten aufweisen. Jeder Schnittstelleneinheit kann jeweils ein Teil der Sensoreinheiten der Sensoranordnung zugeordnet werden. Anders ausgedrückt kann ein Teil der Sensoreinheiten mit einer Schnittstelleneinheit kommunizieren, wohingegen der andere Teil der Sensoreinheiten mit einer weiteren Schnittstelleneinheit kommuniziert. Dies kann insbesondere der Fall sein, wenn das System einen relativ großen Streckenabschnitt oder Bereich abdecken soll. Dadurch können die von dem System bestimmten Positionsinformationen selbst bei einem großen mit dem System abzudeckenden Bereich möglichst echtzeitnah einem externen Empfänger bereitgestellt werden.

Die Sensoreinheiten der Sensoranordnung sind an wenigstens einer Verkehrsleiteinrichtung angebracht. Verkehrsleiteinrichtungen können beispielsweise Leitbaken, Schrankenzäune, Absperrtafeln, Tunnel- und Betonleitwände, Stahlschutzwände, Leitkegel, Pelonen und Leitpfosten sein. Verkehrsleiteinrichtungen können allgemein temporäre oder dauerhafte Einrichtungen sein, die einem Fahrzeug oder einem Verkehrsteilnehmer die Verkehrsführung anzeigen oder vorgeben.

Der wenigstens eine Sensor zur Bestimmung der Positionsinformationen kann ein Time-of-Flight-Sensor sein. Der wenigstens eine Sensor kann dazu ausgebildet sein, Positionsinformationen mittels UWB (englisch: Ultra Wide Band; deutsch: Ultrabreitband), WiFi oder RTK (englisch: Real Time Kinematic; deutsch: Echtzeitkinematik) zu bestimmen. Der wenigstens eine Sensor kann ferner dazu ausgebildet sein, die Positionsinformationen zentimetergenau mittels GPS, DGPS (englisch: Differential Global Positioning System; deutsch: Differentielles Globales Positionierungssystem) oder 5G zu bestimmen.

Die Sensoreinheiten können zur Befestigung an oder Integration in eine Verkehrsleiteinrichtung ausgebildet sein. Die Sensoreinheiten können beispielsweise an einer Warnleuchte für Verkehrssicherungsmaßnahmen befestigt oder in eine solche Warnleuchte integriert sein. Die Sensoreinheiten können dazu ausgebildet sein, mit einer Energiespeichereinheit eine Verkehrsleiteinrichtung verbindbar oder verbunden zu sein. Die Sensoreinheiten können eine Energiespeichereinheit oder eine Einheit zur Erzeugung elektrischer Energie aufweisen. Beispielsweise können die Sensoreinheiten ein Solarelement aufweisen, mit dem elektrische Energie erzeugt werden kann. Eine Sensoreinheit kann somit eine autarke und/oder eine in sich abgeschlossene Einheit sein.

Die Sensoreinheiten können mit einer Kapselung ausgebildet sein. Die Sensoreinheiten können mit der Kapselung wasserdicht und/oder staubdicht ausgebildet sein. Dadurch können die Sensoreinheiten vor Staub, Schmutz, Feuchtigkeit und Temperaturschwankungen geschützt werden. Die Kapselung kann ferner dazu ausgebildet sein, die Sensoreinheiten vor Schlägen, Stößen und Vibrationen zu schützen. Gerade im Umfeld von Baustellen kann durch eine Kapselung die Lebensdauer der Sensoreinheiten erheblich erhöht werden.

Die Sensoreinheiten können wenigstens einen der nachfolgend aufgeführten Sensoren umfassen: Gyroskop, Beschleunigungssensor, Magnetometer, Barometer, Feuchtigkeitssensor, Temperatursensor. Durch diese Sensoren können die mechanischen Belastungen und die Belastungen durch Umwelteinflüsse der Sensoreinheiten ermittelt werden. Beispielsweise kann durch den Beschleunigungssensor und/oder das Gyroskop festgestellt werden, ob die Sensoreinheiten bewegt wurden und/oder das "Aufwachen" des Systems initiiert werden. Ferner kann der Beschleunigungssensor und/oder das Gyroskop dazu dienen das System in den Ruhezustand zu versetzten, um beispielsweise Energie zu sparen. Zudem können durch diese Sensoren die mechanischen Belastungen der Sensoreinheiten durch einen Stoß oder Schlag beispielsweise bei einem Fahrzeuganprall festgestellt werden.

Im Folgenden wird ein Ausführungsbeispiel mit Bezug auf die beigefügten Figuren beschrieben. Es stellen dar:
- Fig. 1: eine schematische Ansicht eines Systems zur Bestimmung der Positionsinformationen von Verkehrsleiteinrichtungen;
- Fig. 2: eine schematische Ansicht des Systems im installierten Zustand;
- Fig. 3: eine weitere schematische Ansicht des Systems im installierten Zustand, wobei einige der Sensoreinheiten eine veränderte Position aufweisen;
- Fig. 4: eine schematische Ansicht, die die Kommunikation des Systems mit einem Fahrzeug als externen Empfänger zeigt;
- Fig. 5: eine schematische Ansicht, die die Kommunikation des Systems mit einem Kartendienst als externen Empfänger zeigt; und
- Fig. 6: eine schematische Ansicht einer Sensoreinheit.

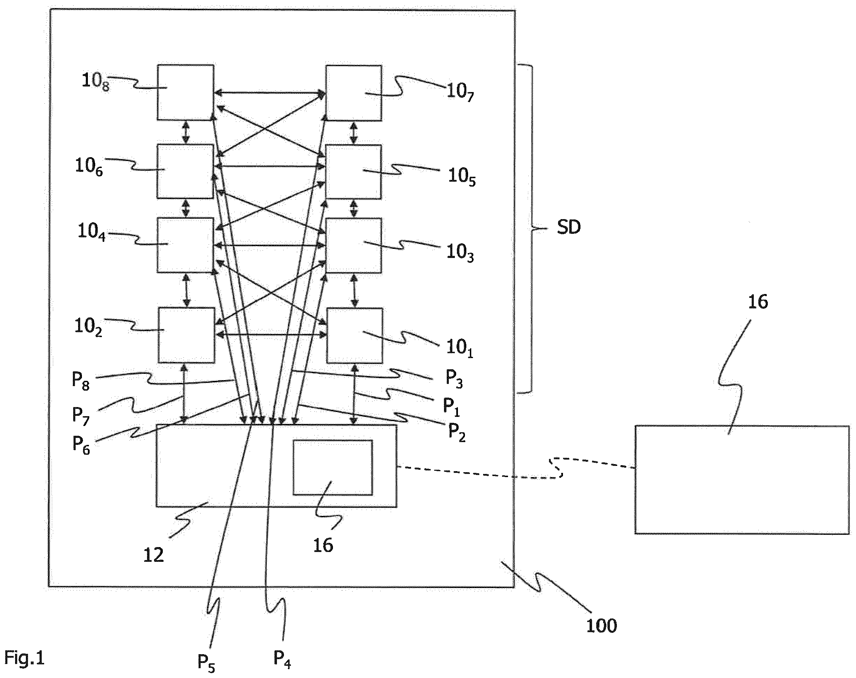

Figur 1 zeigt eine schematische Ansicht eines Systems 100 zur Bestimmung der Position einer Verkehrsleiteinrichtung oder mehrerer Verkehrsleiteinrichtungen.

Das System 100 umfasst eine Sensoranordnung SD, die mehrere Sensoreinheiten 10₁ bis 10s aufweist, und eine Schnittstelleneinheit 12. Wie durch die Pfeile P₁ bis Ps dargestellt ist, kommunizieren die Sensoreinheiten 10₁ bis 10s mit der Schnittstelleneinheit 12. Die Kommunikation zwischen den Sensoreinheiten 10₁ bis 10s und der Schnittstelleneinheit 12 erfolgt kabellos. Die Sensoreinheiten 10₁ bis 10s können auch untereinander kabellos kommunizieren, wie durch die Pfeile dargestellt ist, die sich zwischen den einzelnen Sensoreinheiten 10₁ bis 10s erstrecken. Die Sensoreinheiten 10₁ bis 10s können an Verkehrsleiteinrichtungen (nicht dargestellt) befestigt sein. Ferner können die Sensoreinheiten 10₁ bis 10s auch in die Verkehrsleiteinrichtungen integriert sein. Es ist denkbar an jeder Verkehrsleiteinrichtung eine Sensoreinheit 10₁ bis 10s anzuordnen. Ferner kann eine Sensoreinheit 10₁ bis 10s auch an einem Abschnitt einer Verkehrsleiteinrichtung angebracht sein. Aus Gründen der Übersichtlichkeit sind nicht sämtliche Kommunikationswege dargestellt. Aus diesem Grund sind diese Pfeile auch nicht mit Bezugszeichen versehen.

Die nicht mit Bezugszeichen versehenen Pfeile veranschaulichen zusätzlich zu den Kommunikationswegen der Sensoreinheiten 10₁ bis 10s untereinander wie mit den Sensoreinheiten 10₁ bis 10s die Positionsinformationen der einzelnen Sensoreinheiten 10₁ bis 10₈ bestimmt werden können. Die Sensoreinheiten 10₁ bis 10s bauen zwischen sich ein Maschennetz auf. Jede Sensoreinheit 10₁ bis 10s ermittelt die relativen Positionsinformationen wenigstens einer weiteren Sensoreinheit 10₁ bis 10s. Die relativen Positionsinformationen können beispielsweise einen Abstandswert bzw. den Abstand zwischen den einzelnen Sensoreinheiten 10₁ bis 10s aufweisen. Eine der Sensoreinheiten 10₁ bis 10s kann somit ihren Abstand bzw. die Entfernung zu einer oder mehreren der übrigen Sensoreinheiten 10₁ bis 10₈ erfassen. Beispielsweise kann die Sensoreinheit 10s den Abstand zu den Sensoreinheiten 10₇, 10s und 10e erfassen. Die Sensoreinheit 10₇ erfasst den Abstand zu den Sensoreinheiten 10₅, 10₆ und 10s. Alle Sensoreinheiten 10₁ bis 10₈ ermitteln untereinander den Abstand zu mehreren der übrigen Sensoreinheiten 10₁ bis 10s. Dadurch wird das Maschennetz zwischen den Sensoreinheiten 10₁ bis 10s aufgebaut. Mit diesem Maschennetz können kleinste Veränderungen der Positionsinformationen einer oder mehrerer der Sensoreinheiten 10₁ bis 10s echtzeitnah und hochgenau erfasst werden. Die erfassten Positionsinformationen können dann an die Schnittstelleneinheit 12 ausgegeben werden.

Das System 100 kann die absoluten Positionsinformationen der Schnittstelleneinheit 12 ermitteln und/oder einlesen. Die absoluten Positionsinformationen der Schnittstelleneinheit 12 können vorgegeben sein und/oder vorab mit einem bekannten Vermessungsverfahren bestimmt werden. Beispielsweise können die absoluten Positionsinformationen der Schnittstelleneinheit 12 die Geoposition der Schnittstelleneinheit 12 umfassen. Die Geoposition der Schnittstelleneinheit 12 kann beispielsweise in Weltkoordinaten angegeben sein. Das System 100 bzw. die Schnittstelleneinheit 12 können eine Informationsverarbeitungseinheit 14 aufweisen, die einen Bezug zwischen den von den Sensoreinheiten 10₁ bis 10s erfassten relativen Positionsinformationen und den absoluten Positionsinformationen der Schnittstelleneinheit 12 herstellt.

Die Schnittstelleneinheit 12 des Systems 100 kann mit einem externen Empfänger 16 kommunizieren. Die Kommunikation zwischen der Schnittstelleneinheit 12 und dem externen Empfänger 16 kann kabellos erfolgen. Die Schnittstelleneinheit 12 stellt dem externen Empfänger 16 die mit dem System 100 erfassten Positionsinformationen bereit. Der externe Empfänger 16 kann ein Kartendienst sein, der eine digitale Karte (wird auch als "HD-Karte" bezeichnet) für autonome Fahrzeuge oder Fahrassistenzsysteme bereitstellt. Die von dem System 100 erfassten Positionsinformationen können echtzeitnah in die digitale Karte des Kartendienstes eingespielt werden. Ferner kann der externe Empfänger 16 ein Fahrzeug sein. Das Fahrzeug (nicht gezeigt) kann direkt mit der Schnittstelleneinheit 12 des Systems 100 kommunizieren, um dem Fahrzeug die mit dem System 100 ermittelten Positionsinformationen echtzeitnah zu übermitteln.

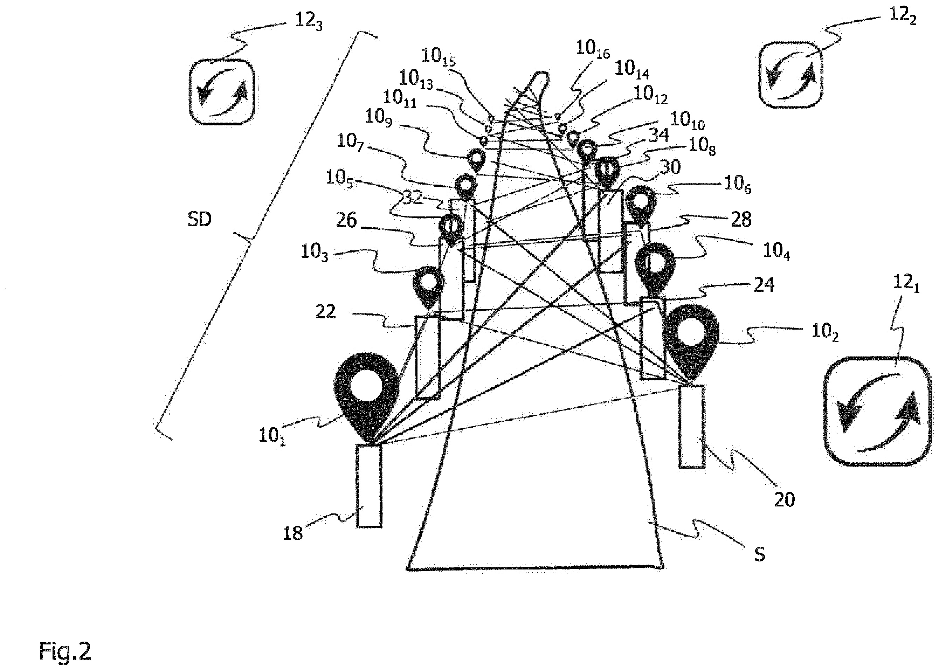

Figur 2 zeigt ein Abschnitt S eines Verkehrswegs oder einer Straße mit geänderter Verkehrsführung. Beispielsweise kann in Figur 2 rechts neben der Fahrspur eine Baustelle sein, die eine Änderung der Verkehrsführung bzw. der Spurführung erforderlich macht. Die Fahrbahn wird in dem in Figur 2 gezeigten Zustand verschwenkt und auf eine Spur der Gegenfahrbahn überführt, die eigentlich dem Gegenverkehr zugeordnet ist. An dem Abschnitt S sind zur Kenntlichmachung der geänderten Verkehrsführung für einen Verkehrsteilnehmer die schematisch dargestellten Verkehrsleiteinrichtungen 18 bis 34 angeordnet. Die Verkehrsleiteinrichtungen 18 bis 34 können Leitbaken oder Leitpfosten sein. Jede der Verkehrsleiteinrichtungen 18 bis 34 weist eine Sensoreinheit 10₁ bis 10s auf. Es sind weitere Sensoreinheiten 10₉ bis 10₁₆ dargestellt, wobei aus Gründen der Übersichtlichkeit auf die Darstellung der den Sensoreinheiten 10₉ bis 10₁₆ zugeordneten Verkehrsleiteinrichtungen verzichtet wurde. Die Sensoreinheiten 10₁ bis 10₁₆ können in die Verkehrsleiteinrichtungen 18 bis 34 integriert oder an den Verkehrsleiteinrichtungen 18 bis 34 befestigt sein.

Die Sensoreinheiten 10₁ bis 10₁₆ spannen zwischen sich ein Maschennetz zur Bestimmung der relativen Positionen der einzelnen Sensoreinheiten 10₁ bis 10₁₆ auf. Das von den Sensoreinheiten aufgespannte Maschennetz wird durch die zwischen den Sensoreinheiten 10₁ bis 10₁₆ verlaufenden Linien dargestellt. Jede Sensoreinheit 10₁ bis 10₁₆ erfasst die relativen Positionsinformationen einer oder mehrerer der übrigen Sensoreinheiten 10₁ bis 10₁₆ Die Sensoreinheit 10₁ erfasst beispielsweise die relativen Positionsinformationen der Sensoreinheiten 10₂, 10s, 10₄, 10s und 10s. In gleicher Weise kann die Sensoreinheit 10₂ die relativen Positionsinformationen der Sensoreinheiten 10₁, 10s, 10₄, 10₅ und 10₇ erfassen. Gleiches gilt für die übrigen Sensoreinheiten 10s bis 10₁₆, die ebenfalls die relativen Positionsinformationen von benachbarten Sensoreinheiten 10₁ bis 10₁₆ erfassen.

Gemäß dem in Figur 2 gezeigten Ausführungsbeispiel umfasst das System 100 drei Schnittstelleneinheiten 12₁, 12₂ und 12s. Die Schnittstelleneinheiten 12₁, 12₂ und 12s haben bekannte absolute Positionsinformationen. Die absoluten Positionsinformationen können von den Schnittstelleneinheiten 12₁, 12₂ und 12s ermittelt oder eingelesen werden. Die Schnittstelleneinheiten 12₁, 12₂ und 12s spannen basierend auf ihren bekannten absoluten Positionsinformationen ein lokales Koordinatensystem auf, in dem die relativen Positionsinformationen der Sensoreinheiten 10₁ bis 10₁₆ bestimmt werden können.

Die Sensoreinheiten 10₁ bis 10₁₆ senden die von ihnen erfassten relativen Positionsinformationen an die Schnittstelleneinheiten 12₁, 12₂ und 12s. Es kann vorgesehen sein, dass eine Gruppe der Sensoreinheiten 10₁ bis 10₁₆ die von Ihnen erfassten Positionsinformationen an die Schnittstelleneinheit 12₁ sendet. Eine jeweils andere Gruppe der Sensoreinheiten 10₁ bis 10₁₆ kann die von Ihnen erfassten Positionsinformationen an die Schnittstelleneinheit 12₂ senden. Eine weitere Gruppe der Sensoreinheiten 10₁ bis 10₁₆ kann die von Ihnen erfassten Positionsinformationen an die Schnittstelleneinheit 12s senden. Die Sensoreinheiten 10₁ bis 10₁₆ können die von ihnen erfassten Positionsinformationen an mehrere der Schnittstelleinheiten 12₁, 12₂ und 12s senden. Beispielsweise können die Sensoreinheiten 10₁ bis 10s die von Ihnen erfassten Positionsinformationen an die Schnittstelleneinheit 12₁ senden, wohingegen die Sensoreinheiten 10₉ bis 10₁₆ die von Ihnen erfassten Positionsinformationen an die Schnittstelleneinheit 12₂ senden. Zusätzlich können die Sensoreinheiten 10₁ bis 10₁₆ die von ihnen erfassten Positionsinformationen an die Schnittstelleinheit 12s senden. Für die Bestimmung von 2-dimensionalen Positionsinformationen können drei Schnittstelleneinheiten 12₁, 12₂ und 12₃ vorgesehen werden. Für Bestimmung von 3-dimensionalen Positionsinformationen können vier Schnittstelleneinheiten 12₁, 12₂, 12₃ und 12ₓ (nicht gezeigt) vorgesehen werden.

Durch die bekannten absoluten Positionsinformationen der Schnittstelleneinheiten 12₁, 12₂ und 12s können die von den Sensoreinheiten 10₁ bis 10₁₆ erfassten relativen Positionsinformationen mit den absoluten Positionsinformationen bzw. mit der Geoposition der Schnittstelleneinheiten 12₁, 12₂ und 12s verknüpft werden. Die auf diese Weise erzeugten Positionsinformationen können von den Schnittstelleneinheiten 12₁, 12₂ und 12s einem externen Empfänger bereitgestellt werden. Die von den Sensoreinheiten 10₁ bis 10₁₆ erfassten relativen Positionsinformationen können auch ohne Verknüpfung mit absoluten Positionsinformationen an externe Empfänger ausgegeben werden.

Mit der beschriebenen Sensoranordnung können Änderungen der Positionsinformationen der an den Verkehrsleiteinrichtungen 18 bis 34 angebrachten Sensoreinheiten 10₁ bis 10₁₆ schnell und hochgenau erfasst werden, sodass die von dem System 100 bereitgestellten Positionsinformationen über die Schnittstelleneinheiten 12₁, 12₂ und 12sechtzeitnah einem externen Empfänger zur Verfügung gestellt werden können.

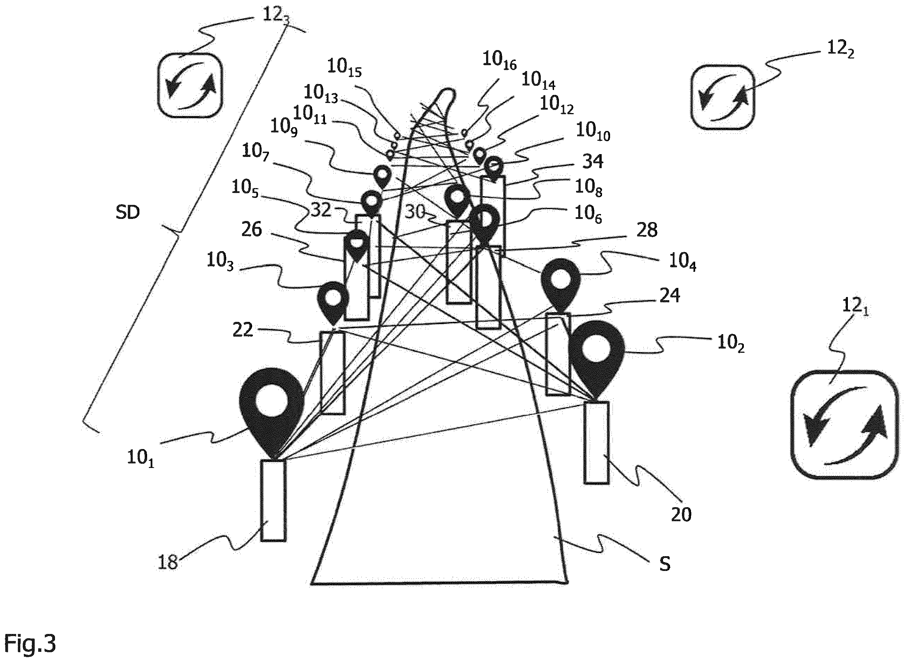

Figur 3 zeigt eine Situation in der die Verkehrsleiteinrichtungen 28 und 30, d. h. die Leitbaken 28 und 30 verschoben wurden. Die Leitbaken können beispielsweise durch Baustellenarbeiter oder ein Baustellenfahrzeug (nicht gezeigt) verschoben worden sein. Die Leitbaken 28 und 30 befinden sich mit denen an ihnen angeordneten Sensoreinheiten 10₆ und 10s in der Fahrspur des Abschnitts S. Durch die Sensoreinheiten 10₁ bis 10₁₆ und das von Ihnen aufgespannte, durch die Linien dargestellte Maschennetz kann die Veränderung der Position der Sensoreinheiten 10₆ und 10s bzw. die neue Position der Sensoreinheiten 10s und 10s mit den Verkehrsleiteinrichtungen 28 und 30 schnell und hochgenau erfasst werden. Mit dem System 100 können aufgrund der schnellen und genauen Erfassung der Veränderungen der Positionsinformationen der Verkehrsleiteinrichtungen 28 und 30 echtzeitnah aktualisierte Positionsinformationen an externe Empfänger ausgegeben werden.

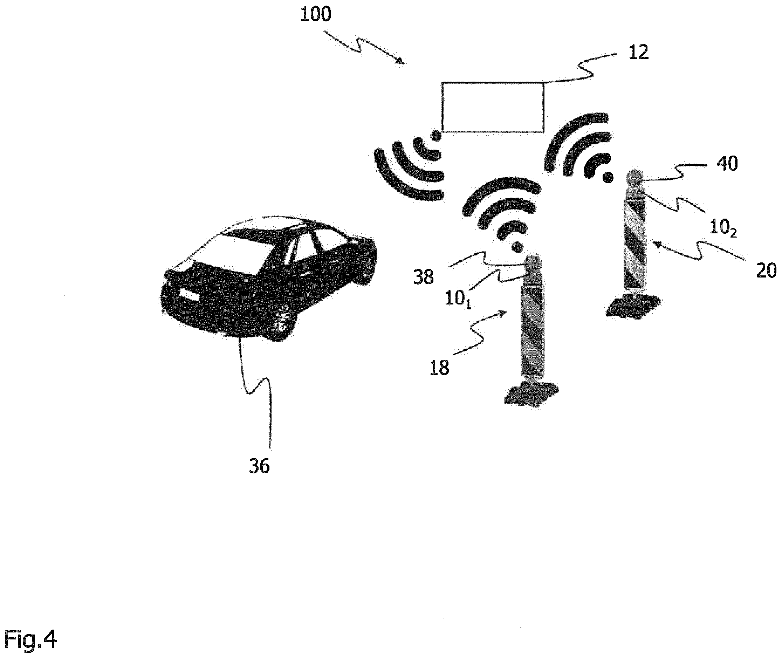

Figur 4 zeigt eine schematische Ansicht der Kommunikation des Systems 100 mit einem Fahrzeug 36 als externen Empfänger. In Figur 4 sind als Verkehrsleiteinrichtungen die Leitbaken 18 und 20 gezeigt. Die Leitbaken 18 und 20 weisen jeweils eine Warnleuchte 38 und 40 auf. Die Sensoreinheiten 10₁ und 10₂ können an den Warnleuchte 38 und 40 befestigt oder in die Warnleuchte 38 und 40 integriert sein. Die Sensoreinheiten 10₁ und 10₂ senden die von Ihnen erfassten relativen Positionsinformationen an die Schnittstelleneinheit 12 des Systems 100. Die Schnittstelleneinheit 12 ist dazu ausgebildet, die von den Sensoreinheiten 10₁ und 10₂ erfassten relativen Positionsinformationen dem Fahrzeug 36 als externen Empfänger bereitzustellen. Dadurch könne dem Fahrzeug echtzeitnah die exakten Positionen der Verkehrsleiteinrichtungen 18 und 20 und der daran angeordneten Sensoreinheiten 10₁ und 10₂ bereitgestellt werden. Das Fahrzeug 36 kann den Abschnitt S (siehe Figur 2) sicher durchfahren oder anhalten, um nicht mit den Verkehrsleiteinrichtungen 28 und 30 zu kollidieren.

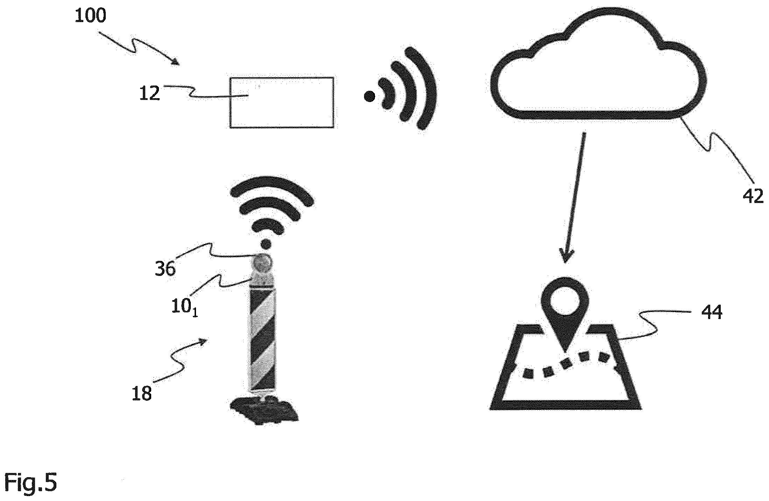

Figur 5 zeigt eine schematische Darstellung der Kommunikation des Systems 100 mit einem Kartendienst 42. Die Verkehrsleiteinrichtung 18 ist eine Leitbake mit einer daran angebrachten Warnleuchte 36. Die Sensoreinheit 10₁ kann in die Warnleuchte 36 integriert oder an der Warnleuchte 36 befestigt sein. Die Sensoreinheit 10₁ an der Leitbaken 18 sendet die von ihr erfassten Positionsinformationen an die Schnittstelleneinheit 12 des Systems 100. Die Schnittstelleneinheit 12 des Systems 100 kann die von der Sensoreinheit 10₁ erfassten relativen Positionsinformationen mit ihren absoluten Positionsinformationen verorten. Die Schnittstelleneinheit 12 kann die von dem System 100 erfassten Positionsinformationen dem Kartendienst 42 zur Verfügung stellen. Der Kartendienst 42 kann cloud-basiert sein. Die dem Kartendienst 42 zur Verfügung gestellten Positionsinformationen können in eine digitale Karte 44 integriert werden, sodass autonome Fahrzeuge oder Fahrassistenzsysteme eines Fahrzeugs, die mit ihren Navigationssystemen auf die digitale Karte 44 zugreifen, die aktuelle Position Leitbake 18 mit der Sensoreinheit 10₁ erfassen können.

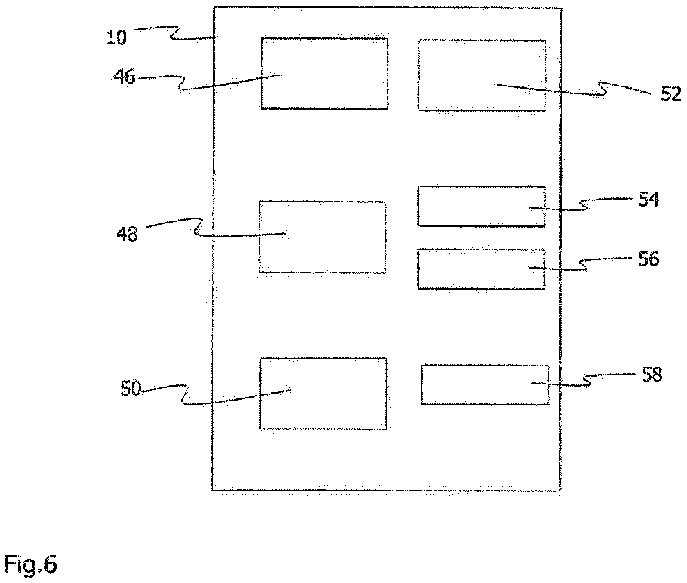

Figur 6 zeigt eine schematische Ansicht einer Sensoreinheit 10. Die Sensoreinheit 10 weist einen Sensor 46 zur Erfassung der Positionsinformationen, eine Sende-/Empfangseinheit 48 und eine Steuerung 50 auf, die den Sensor 46 und die Sende-/Empfangseinheit 48 steuern kann. Die Sensoreinheit 10 kann ferner eine Energiespeichereinheit 52 aufweisen. Anstelle der Energiespeichereinheit 52 kann eine Einheit zur Erzeugung von elektrischer Energie vorgesehen sein. Diese Einheit kann beispielsweise ein Solarpanel aufweisen, um die Sensoreinheit 10 mit elektrischer Energie zu versorgen. Eine Sensoreinheit 10 kann somit eine autarke und/oder eine in sich abgeschlossene Einheit sein. Ferner kann die Sensoreinheit 10 mit einer Energiespeichereinheit oder der Energieversorgung einer Verkehrsleiteinrichtung verbunden werden. In diesem Fall kann die Sensoreinheit ohne eigene Energieversorgung ausgebildet sein.

Darüber hinaus kann die Sensoreinheit 10 einen Beschleunigungssensor 54 und ein Gyroskop 56 aufweisen. Mit dem Beschleunigungssensor 54 und dem Gyroskop 56 können die mechanischen Belastungen der Sensoreinheit 10 aufgrund von Stößen, Schlägen oder Vibrationen erfasst werden. Neben dem Beschleunigungssensor 54 und dem Gyroskop 56 kann die Sensoreinheit 10 wenigstens einen weiteren Sensor 58 aufweisen. Dieser Sensor kann ein Temperatursensor, ein Feuchtigkeitssensor, ein Barometer oder ein Magnetometer sein. Es ist ebenfalls denkbar, dass die Sensoreinheit 10 mehrere der genannten Sensoren oder alle der genannten Sensoren umfasst. Die von den genannten Sensoren bzw. von den Sensoren 54, 56 und 58 erfassten Informationen können an die Schnittstelleinheit 12 gesendet werden (siehe Fig. 1). Dadurch kann der Zustand der Sensoreinheit 10 ermittelt und berücksichtigt werden. Ferner ist es denkbar, auf Basis der von den genannten Sensoren bzw. von den Sensoren 54, 56 und 58 erfassten Informationen die ermittelten relativen Positionsinformationen zu interpretieren bzw. die erfassten Informationen bei der Erfassung der relativen Positionsinformationen zu berücksichtigen.

Mit dem erfindungsgemäßen System 100 kann die Position wenigstens einer Verkehrsleiteinrichtung 18 bis 34 exakt und in Echtzeit oder zumindest echtzeitnah bestimmt werden. Die mit dem System bestimmten Positionsinformationen können zur Überprüfung der Positionierung der Verkehrsleiteinrichtungen bei geänderter Verkehrsführung (z.B. bei einer Baustelle), für autonome Fahrzeuge oder Fahrassistenzsysteme sowie für Kartendienste bereitgestellt werden. Dadurch kann die Verkehrsführung und auch die Position und Lage von Baustellen exakt und echtzeitnah bestimmt werden.

## Patentansprüche

1. System (100) zum Bereitstellen von Positionsinformationen zur Überprüfung und Dokumentation von Positionen von als Leitbaken ausgebildeten Verkehrsleiteinrichtungen (18 bis 34) bei geänderter Verkehrsführung im Bereich einer Baustelle, wobei die Verkehrsleiteinrichtungen (18 bis 34) Fahrbahnen begrenzen und/oder Fahrbahnen bei geänderter Verkehrsführung oder bei geänderter Spurführung festlegen,
wobei das System (100) wenigstens eine Sensoranordnung (SD) und wenigstens drei Schnittstelleneinheiten (12₁, 12₂, 12₃) aufweist,
wobei die Sensoranordnung (SD) an wenigstens einer Verkehrsleiteinrichtung (18 bis 34) angebracht ist,
wobei die Sensoranordnung (SD) dazu ausgebildet ist, zumindest relative Positionsinformationen der Sensoranordnung (SD) zu bestimmen, die die Position der wenigstens einen Verkehrsleiteinrichtung (18 bis 34) angeben,
wobei die Sensoranordnung (SD) dazu ausgebildet ist, die bestimmten relativen Positionsinformationen an die wenigstens drei Schnittstelleneinheiten (12₁, 12₂, 12s) zu senden,
wobei die wenigstens drei Schnittstelleneinheiten (12₁, 12₂, 12₃) dazu ausgebildet sind, die von der Sensoranordnung (SD) gesendeten relativen Positionsinformationen zu empfangen, und wobei die wenigstens drei Schnittstelleneinheiten (12₁, 12₂, 12₃) ferner dazu ausgebildet sind, die relativen Positionsinformationen wenigstens einem externen Empfänger (16) bereitzustellen, wobei die Sensoranordnung (SD) mehrere Sensoreinheiten (10₁ bis 10₁₆) umfasst, wobei jede der Sensoreinheiten (10₁ bis 10₁₆) dazu ausgebildet ist, die relative Positionsinformationen relativ zu zumindest einer weiteren Sensoreinheit (10₁ bis 10₁₆) zu ermitteln, wobei die relativen Positionsinformationen einen Abstandswert einer der Sensoreinheiten (10₁ bis 10₁₆) zu wenigstens einer weiteren der Sensoreinheiten (10₁ bis 10₁₆) umfassen,
wobei die Sensoreinheiten (10₁ bis 10₁₆) wenigstens einen Sensor (46) aufweisen, der die relativen Positionsinformationen wenigstens einer weiteren Sensoreinheit (10₁ bis 10₁₆) der Sensoranordnung (SD) erfasst, wobei die Sensoreinheiten (10₁ bis 10₁₆) der Sensoranordnung (SD) zusammenwirken, um die relativen Positionsinformationen für jede Sensoreinheit (10₁ bis 10₁₆) zu bestimmen, wobei die Sensoreinheiten (10₁ bis 10₁₆) ein Sensorfeld bilden, in dem Veränderungen der relativen Positionsinformationen anhand zumindest einer Änderung eines Abstandswertes zwischen zumindest zwei Sensoreinheiten (10₁ bis 10₁₆) erfassbar sind,
wobei das System (100) dazu ausgebildet ist, die Position der wenigstens drei Schnittstelleneinheiten (12₁, 12₂, 12₃) in absoluten Positionsinformationen zu ermitteln und/oder einzulesen,
wobei das System (100) wenigstens eine Informationsverarbeitungseinheit (14) aufweist, die dazu ausgebildet ist, einen Bezug zwischen den von der wenigstens einen Sensoreinheit (101 bis 1016) bestimmten relativen Positionsinformationen
und den absoluten Positionsinformationen der wenigstens drei Schnittstelleneinheit (12₁, 12₂, 12₃) herzustellen, und
wobei die wenigstens drei Schnittstelleneinheiten (12₁, 12₂, 12₃) zur Bestimmung von zumindest 2-dimensionalen Positionsinformationen durch Verknüpfen der relativen Positionsinformationen und der absoluten Positionsinformationen ausgebildet sind, wobei die 2-dimensionalen Positionsinformationen zum Integrieren in eine digitale Karte (44) eines Kartendienstes (42) als externen Empfänger (16) ausgebildet sind, wobei die digitale Karte (44) für einen Zugriff eines Navigationssystems eines autonomen Fahrzeugs (36) oder eines Fahrassistenzsystems eines Fahrzeugs (36) ausgebildet ist um die bestimmten Positionen der Verkehrsleiteinrichtungen (18 bis 34) zu erfassen.

2. System (100) nach Anspruch 1,
wobei die wenigstens drei Schnittstelleneinheiten (12₁, 12₂, 12₃) dazu ausgebildet sind, kabellos mit dem wenigstens einen externen Empfänger (16) zu kommunizieren.

3. System (100) nach einem der Ansprüche 1 bis 2,
wobei die Sensoreinheiten (10₁ bis 10₁₆) wenigstens eine Sende-/Empfangseinheit (48) aufweisen, die zumindest zur kabellosen Kommunikation mit den wenigstens drei Schnittstelleneinheiten (12₁, 12₂, 12₃) ausgebildet sind, und/oder
wobei die Sensoreinheiten (10₁ bis 10₁₆) dazu ausgebildet sind, kabellos mit wenigstens einer weiteren Sensoreinheit (10₁ bis 10₁₆) zu kommunizieren.

4. System (100) nach einem der Ansprüche 1 bis 3,
wobei die wenigstens drei Schnittstelleneinheiten (12₁, 12₂, 12₃) dazu ausgebildet sind, mit einem Fahrzeug (36) als externen Empfänger zu kommunizieren.

5. System (100) nach einem der Ansprüche 1 bis 4,
wobei der Sensor (46) ein Time-of-Flight-Sensor zur Erfassung der relativen Positionsinformationen ist.

6. System (100) nach einem der Ansprüche 1 bis 5,
wobei die wenigstens drei Schnittstelleneinheiten (12₁, 12₂, 12₃) dazu ausgebildet sind, ein Koordinatensystem aufzuspannen, in dem die relativen Positionsinformationen der Sensoranordnung (SD) bestimmt werden, und/oder
wobei den drei Schnittstelleneinheiten (12₁, 12₂, 12₃) jeweils ein Teil der Sensoreinheiten (10₁ bis 10₁₆) der Sensoranordnung (SD) zugeordnet ist.

## Claims

1. System (100) for providing position information for checking and documenting positions of traffic guidance devices (18 to 34) in the form of guidance beacons in the event of amended traffic routing in the area of a construction site, wherein the traffic guidance devices (18 to 34) delimit lanes and/or define lanes in the event of amended traffic routing or amended lane routing,
wherein the system (100) has at least one sensor arrangement (SD) and at least three interface units (12₁, 12₂, 12s),
wherein the sensor arrangement (SD) is attached to at least one traffic guidance device (18 to 34),
wherein the sensor arrangement (SD) is designed to determine at least relative position information of the sensor arrangement (SD) which indicates the position of the at least one traffic guidance device (18 to 34),
wherein the sensor arrangement (SD) is designed to transmit the determined relative position information to the at least three interface units (12₁, 12₂, 12s),
wherein the at least three interface units (12₁, 12₂, 12s) are designed to receive the relative position information transmitted by the sensor arrangement (SD), and wherein the at least three interface units (12₁, 12₂, 12s) are further designed to provide the relative position information to at least one external receiver (16), wherein the sensor arrangement (SD) comprises a plurality of sensor units (10₁ to 10₁₆), wherein each of the sensor units (10₁ to 10₁₆) is designed to determine the relative position information relative to at least one further sensor unit (10₁ to 10₁₆), wherein the relative position information comprises a distance value of one of the sensor units (10₁ to 10₁₆) to at least one further of the sensor units (10₁ to 10₁₆),
wherein the sensor units (10₁ to 10₁₆) comprise at least one sensor (46) which captures the relative position information of at least one further sensor unit (10₁ to 10₁₆) of the sensor arrangement (SD), wherein the sensor units (10₁ to 10₁₆) of the sensor arrangement (SD) cooperate with each other in order to determine the relative position information for each sensor unit (10₁ to 10₁₆), wherein the sensor units (10₁ to 10₁₆) form a sensor field in which changes in the relative position information can be captured on the basis of at least one change in a distance value between at least two sensor units (10₁ to 10₁₆),
wherein the system (100) is designed to determine and/or read in the position of the at least three interface units (12₁, 12₂, 12s) in absolute position information,
wherein the system (100) has at least one information processing unit (14) which is designed to produce a reference between the relative position information determined by the at least one sensor unit (10₁ to 10₁₆) and the absolute position information of the at least three interface units (12₁, 12₂, 12s), and
wherein the at least three interface units (12₁, 12₂, 12s) are designed to determine at least 2-dimensional position information by linking the relative position information and the absolute position information, wherein the 2-dimensional position information is designed to be integrated into a digital map (44) of a map service (42) as external receiver (16), wherein the digital map (44) is designed for access by a navigation system of an autonomous vehicle (36) or a driving assistance system of a vehicle (36) in order to capture the determined positions of the traffic guidance devices (18 to 34).

2. System (100) of claim 1,
wherein the at least three interface units (12₁, 12₂, 12s) are designed to communicate wirelessly with the at least one external receiver (16).

3. System (100) of any one of claims 1 to 2,
wherein the sensor units (10₁ to 10₁₆) have at least one transmitter/receiver unit (48) which are designed at least for wireless communication with the at least three interface units (12₁, 12₂, 12s), and/or
wherein the sensor units (10₁ to 10₁₆) are designed to communicate wirelessly with at least one further sensor unit (10₁ to 10₁₆).

4. System (100) of any one of claims 1 to 3,
wherein the at least three interface units (12₁, 12₂, 12s) are designed to communicate with a vehicle (36) as external receiver.

5. A system (100) of any one of claims 1 to 4,
wherein the sensor (46) is a time-of-flight sensor for capturing the relative position information.

6. System (100) of any one of claims 1 to 5,
wherein the at least three interface units (12₁, 12₂, 12s) are designed to span a coordinate system in which the relative position information of the sensor arrangement (SD) is determined, and/or
wherein the three interface units (12₁, 12₂, 12s) are each assigned a part of the sensor units (10₁ to 10₁₆) of the sensor arrangement (SD).

## Revendications

1. Système (100) de fourniture d'informations de position pour le contrôle et la documentation de positions de dispositifs de contrôle de la circulation (18 à 34) configurés en tant que piquets de balisage en cas de modification de l'acheminement de la circulation dans la zone d'un chantier, dans lequel les dispositifs de contrôle de la circulation (18 à 34) délimitent des voies et/ou définissent des voies en cas de modification de l'acheminement de la circulation ou du routage en voie,
dans lequel le système (100) a au moins un système de capteurs (SD) et au moins trois unités d'interface (12₁, 12₂, 12s),
dans lequel le système de capteurs (SD) est connecté à au moins un dispositif de contrôle de la circulation (18 à 34),
dans lequel le système de capteurs (SD) est configuré pour déterminer au moins des informations de position relative du système de capteurs (SD) qui indiquent la position d'au moins un dispositif de contrôle de la circulation (18 à 34),
dans lequel le système de capteurs (SD) est configuré pour transmettre les informations de position relative déterminées aux au moins trois unités d'interface (12₁, 12₂, 12s),
dans lequel les au moins trois unités d'interface (12₁, 12₂, 12s) sont configurées pour recevoir les informations de position relative envoyées par le système de capteurs (SD) et dans lequel les au moins trois unités d'interface (12₁, 12₂, 12s) sont en outre configurées pour fournir les informations de position relative à au moins un récepteur externe (16), dans lequel le système de capteurs (SD) comprend une pluralité d'unités de capteurs (10₁ à 10₁₆), chacune des unités de capteurs (10₁ à 10₁₆) étant configurée pour déterminer les informations de position relative par rapport à au moins une autre unité de capteurs (10₁ à 10₁₆), dans lequel les informations de position relative comprennent une valeur de distance entre l'une des unités de capteurs (10₁ à 10₁₆) et au moins une autre des unités de capteurs (10₁ à 10₁₆),
dans lequel les unités de capteurs (10₁ à 10₁₆) comprennent au moins un capteur (46) qui détecte les informations de position relative d'au moins une autre unité de capteurs (10₁ à 10₁₆) du système de capteurs (SD), les unités de capteurs (10₁ à 10₁₆) du système de capteurs (SD) coopérant entre elles, pour déterminer les informations de position relative de chaque unité de capteurs (10₁ à 10₁₆), les unités de capteurs (10₁ à 10₁₆) formant un champ de capteurs dans lequel les variations des informations de position relative peuvent être détectées sur la base d'au moins une variation de la valeur de la distance entre au moins deux unités de capteurs (10₁ à 10₁₆),
dans lequel le système (100) est configuré pour déterminer et/ou lire la position d'au moins trois unités d'interface (12₁, 12₂, 12s) dans des informations de position absolue,
dans lequel le système (100) a au moins une unité de traitement des informations (14) qui est configurée pour établir une référence entre les informations de position relative déterminées par au moins une unité de capteurs (10₁ à 10₁₆) et les informations de position absolue des au moins trois unités d'interface (12₁, 12₂, 12s), et
dans lequel les au moins trois unités d'interface (12₁, 12₂, 12s) sont configurées pour déterminer au moins des informations de position bidimensionnelles en reliant les informations de position relative et les informations de position absolue, les informations de position bidimensionnelles étant configurées pour être intégrées dans une carte numérique (44) d'un service cartographique (42) en tant que récepteur externe (16), dans lequel la carte numérique (44) est configurée pour l'accès par un système de navigation d'un véhicule autonome (36) ou par un système d'aide à la conduite d'un véhicule (36) afin de détecter les positions déterminées des dispositifs de contrôle de la circulation (18 à 34).

2. Système (100) selon la revendication 1,
dans lequel les au moins trois unités d'interface (12₁, 12₂, 12s) sont configurées pour communiquer sans fil avec l'au moins un récepteur externe (16).

3. Système (100) selon l'une des revendications 1 à 2,
dans lequel les unités de capteurs (10₁ à 10₁₆) comprennent au moins une unité émetteur/récepteur (48) configurée au moins pour communiquer sans fil avec les au moins trois unités d'interface (12₁, 12₂, 12s), et/ou
dans lequel les unités de capteurs (10₁ à 10₁₆) sont configurées pour communiquer sans fil avec au moins une autre unité de capteurs (10₁ à 10₁₆).

4. Système (100) selon l'une des revendications 1 à 3,
dans lequel les au moins trois unités d'interface (12₁, 12₂, 12s) sont configurées pour communiquer avec un véhicule (36) en tant que récepteur externe.

5. Système (100) selon l'une des revendications 1 à 4,
dans lequel le capteur (46) est un capteur à temps de vol pour détecter les informations de position relative.

6. Système (100) selon l'une des revendications 1 à 5,
dans lequel les au moins trois unités d'interface (12₁, 12₂, 12s) sont configurées pour couvrir un système de coordonnées dans lequel les informations de position relative du système de capteurs (SD) sont déterminées, et/ou
dans lequel les trois unités d'interface (12₁, 12₂, 12s) sont attribuées chacune à une partie des unités de capteurs (10₁ à 10₁₆) du système de capteurs (SD).
